# EUROPEAN PATENT APPLICATION

(11) **EP 4 343 929 A1**
(43) Date of publication of application: **27.03.2024**
(21) Application number: 21956003.4
(22) Date of filing: 02.09.2021
(51) Int. Cl.: H01M 10/658, H01M 50/204, H01M 50/291

(54) **FIRE-SPREAD PREVENTION TYPE CELL UNIT, METHOD FOR MANUFACTURING SAME, AND BATTERY**

(71) Applicant: Shin-Etsu Polymer Co., Ltd., Tokyo 100-0004 (JP)
(72) Inventor: DENDO Kenji, Kodama-gun, Saitama 367-0241 (JP)
(74) Representative: Arnold & Siedsma
(86) International application number: PCT/JP2021/032249
(87) International publication number: WO 2023/032114

(57) **Abstract**

To provide a fire-spread prevention type cell unit having a battery cell with a fire-spread prevention sheet that easily deforms in response to overheating and expansion of battery cells and maintains the porosity of the sheet by enabling long-term elastic deformation, a method for manufacturing the same, and a battery. The present invention relates to a fire-spread prevention type cell unit 1 including a battery cell 20 and a fire-spread prevention sheet 10 applied to a side located in the arrangement direction of the battery cell 20, wherein the fire-spread prevention sheet 10 is a porous sponge sheet, and pores 15 inside the fire-spread prevention sheet 10 have an elongated shape with the lengthwise direction of the pores 15 oriented in the thickness direction of the fire-spread prevention sheet 10, a method for manufacturing the same, and a battery.

## Description

### Cross Reference

The contents of the patents, patent applications, and documents cited in this application are incorporated herein by reference.

### Technical Field

The present invention relates to a fire-spread prevention type cell unit having a battery cell with a fire-spread prevention sheet, a method for manufacturing the same, and a battery including the fire-spread prevention cell unit.

### Background Art

Currently, there is a growing movement around the world to gradually convert conventional gasoline or diesel vehicles to electric vehicles to reduce the burden on the global environment. Particularly, electric vehicles are proliferating in European countries such as France, the Netherlands, and Germany, and also in China.

Various batteries such as the automotive batteries above may undergo thermal runaway for some reason and catch fire or start smoking. Recently, automotive batteries with multiple battery cells juxtaposed inside an enclosure have become known. In such a battery with multiple juxtaposed battery cells, when one battery cell catches fire or starts smoking, heat is transferred to surrounding battery cells, which may lead to even greater fire, smoking, explosion, or other problems. To minimize the damage from such problems, methods for inhibiting the transfer of heat from an abnormally hot battery cell to surrounding battery cells are being considered. For example, a known method provides a fire-spread prevention sheet, such as a fireproof material or thermal insulation layer, between multiple battery cells (see Patent Literature 1).

### Citation List

### Patent Literature

Patent Literature 1: Japanese Patent Laid-Open No. 2018-206604

### Summary of Invention

### Technical Problem

A fire-spread prevention sheet desirably has low hardness and is easily deformable because of the need to reduce damage to the sheet even if the battery cells expand due to overheating. A fire-spread prevention sheet also preferably contains air to improve the thermal insulation of the sheet. To meet this demand, the inventor considered providing a porous rubber sheet on the sides of the battery cells and inserting the sheet between the battery cells. The inventor developed the porous rubber sheet to maintain the porous state of the sheet by enabling long-term elastic deformation even after repeated compression and release of the sheet. The present invention also contributes to achieving the applicant's sustainable development goal to "ensure access to affordable, reliable, sustainable and modern energy for all".

The present invention has been made in light of the above problems, and an objective thereof is to provide a fire-spread prevention type cell unit having a battery cell with a fire-spread prevention sheet that easily deforms in response to overheating and expansion of battery cells and maintains the porosity of the sheet by enabling long-term elastic deformation, a method for manufacturing the same, and a battery.

### Solution to Problem

(1) To achieve the objective, a fire-spread prevention type cell unit in one embodiment includes:
   a battery cell; and
   a fire-spread prevention sheet applied to a side located in an arrangement direction of the battery cell, wherein
   the fire-spread prevention sheet is a porous sponge sheet, and
   pores inside the fire-spread prevention sheet have an elongated shape with a lengthwise direction of the pores oriented in a thickness direction of the fire-spread prevention sheet.
(2) In a fire-spread prevention type unit in another embodiment, preferably, the adhesion of an application surface of the fire-spread prevention sheet to the battery cell may be higher than the adhesion of an outer surface located on the opposite side from the application surface in the thickness direction of the fire-spread prevention sheet.
(3) In a fire-spread prevention type unit in another embodiment, preferably, the fire-spread prevention sheet may further include a fire retardant material.
(4) In a fire-spread prevention type unit in another embodiment, preferably, the fire-spread prevention sheet may contain silicone rubber as a main material.
(5) To achieve the objective, a method for manufacturing a fire-spread prevention type cell unit in one embodiment is a method for manufacturing the fire-spread prevention type cell unit of any of the above, and includes:
   a sandwiching step of sandwiching a curable composition, which serves as a fire-spread prevention sheet after curing, between plates;
   a curing step of manufacturing a sponge-like cured body by inducing foaming so that the lengthwise direction of the pores points in the sandwiching direction of the plates after the sandwiching step;
   a sheet shaping step of using the cured body to shape the sheet into a form with the lengthwise direction of the pores pointing in the thickness direction of the fire-spread prevention sheet; and
   an applying step of applying the fire-spread prevention sheet after the sheet shaping step to the side located in the arrangement direction of the battery cell.
(6) To achieve the objective, a battery in one embodiment includes a plural arrangement of the fire-spread prevention type cell unit of any of the above.

### Advantageous Effects of Invention

According to the present invention, a fire-spread prevention type cell unit having a battery cell with a fire-spread prevention sheet that easily deforms in response to overheating and expansion of battery cells and maintains the porosity of the sheet by enabling long-term elastic deformation, a method for manufacturing the same, and a battery can be provided.

### Brief Description of Drawings

[Figure 1] Figure 1 illustrates a perspective view for explaining a configuration of a fire-spread prevention type cell unit in an embodiment of the invention.
[Figure 2] Figure 2 illustrates an A-A cross section and an enlarged view of portion B of the fire-spread prevention type cell unit in Figure 1.
[Figure 3] Figure 3 illustrates schematic diagrams of respectively compressed states of a molding (A) in which the lengthwise direction of elongated pores is oriented substantially horizontally and a molding (B) in which the lengthwise direction of elongated pores is oriented substantially vertically.
[Figure 4] Figure 4 illustrates a flow of steps for manufacturing a fire-spread prevention type cell unit in an embodiment of the invention and cross sections of the representative form in each step.
[Figure 5] Figure 5 illustrates compression set measurement results for each molding.
[Figure 6] Figure 6 illustrates a perspective view of the situation when loading a fire-spread prevention type cell unit into a battery in an embodiment and the situation after loading is complete.

### Reference Signs List

1...fire-spread prevention type cell unit, 10...fire-spread prevention sheet, 11...application surface, 12...outer surface, 15...pore, 20...battery cell, 25...plate, 26...curable composition, 27...cured body, 30...battery.

### Description of Embodiment

The following describes an embodiment of the invention with reference to the drawings. Note that the embodiment described hereinafter does not limit the invention as in the claims, and not all of the various elements and combinations thereof described in the embodiment are essential to the solution of the invention.

### 1. Fire-spread prevention type cell unit

First, a fire-spread prevention type cell unit of the embodiment of the invention is described with reference to the drawings.

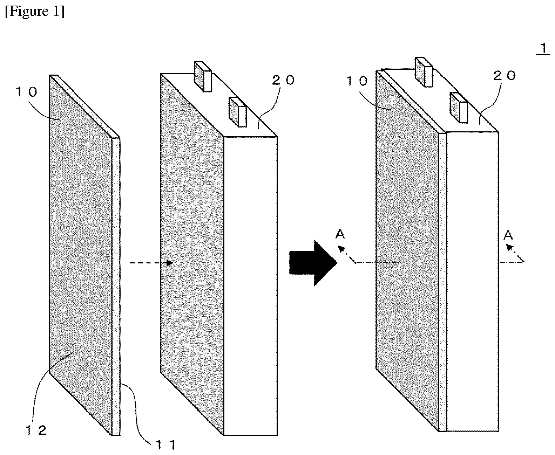

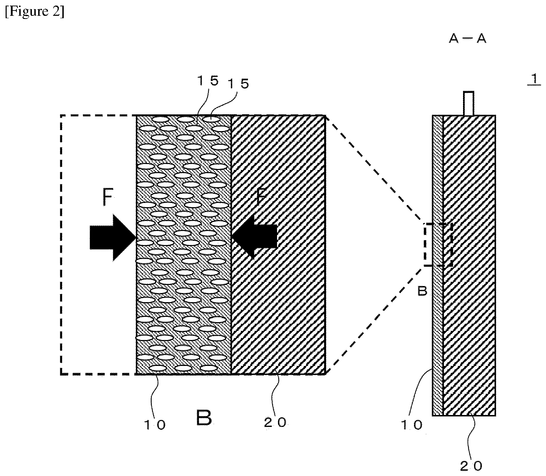

Figure 1 illustrates a perspective view for explaining a configuration of a fire-spread prevention type cell unit of the embodiment of the invention. Figure 2 illustrates an A-A cross section and an enlarged view of portion B of the fire-spread prevention type cell unit in Figure 1.

The fire-spread prevention type cell unit 1 of the embodiment includes battery cells 20 and fire-spread prevention sheets 10 applied to the side located in the arrangement direction of the battery cells 20. More specifically, the fire-spread prevention type cell unit 1 is the unification of the battery cells 20 and the fire-spread prevention sheets 10 applied to at least one of the two sides in the direction of arranging the battery cells 20. The fire-spread prevention sheet 10 is disposed between multiple battery cells 20 inside a battery and can prevent fire-spread by inhibiting heat transfer to another battery cell 20 when a battery cell 20 overheats. The fire-spread prevention sheet 10 is used by applying the broadest surface thereof to the battery cell 20. A single configuration of the fire-spread prevention sheet 10 applied to the battery cell 20 is referred to as the fire-spread prevention type cell unit 1. In this embodiment, the fire-spread prevention sheet 10 adheres to the battery cell 20 and can be applied without an intermediary layer such as a bonding agent. The thickness of the fire-spread prevention sheet 10 is not particularly restricted, but is preferably 1-20 mm, more preferably 2-8 mm.

In the fire-spread prevention sheet 10, the adhesion of an application surface 11 to the battery cell 20 is preferably higher than the adhesion of an outer surface 12 located on the opposite side from the application surface 11 in the thickness direction of the fire-spread prevention sheet 10. As a result, each fire-spread prevention type cell unit 1 can be loaded into or withdrawn from the battery easily. In this application, "adhesion", unlike "bonding" or "fixing", is interpreted as a state allowing repeated application.

In the embodiment, the application surface 11 for applying the fire-spread prevention sheet 10 to the battery cell 20 is a highly smooth surface that can adhere with little or no air intervening state between itself and the broadest surface (side) of the battery cell 20. The preferable surface roughness of the application surface 11, in terms of arithmetic mean height (Sa) based on "ISO 25178: Surface texture", is in the range of Sa = 0.05-0.4 µm, more preferably Sa = 0.05-0.3 µm. Meanwhile, the outer surface 12 is a less smooth surface than the application surface 11. The preferable surface roughness of the outer surface 12, in terms of arithmetic mean height (Sa) based on "ISO 25178: Surface texture", is in the range of Sa = 0.5-20 µm, more preferably Sa = 5-20 µm.

In terms of a reference other than Sa, the maximum height (Sz) based on "ISO 25178: Surface texture" is preferably greater for the outer surface 12 than the application surface 11. The preferable surface roughness of the application surface 11, in terms of maximum height (Sz) based on "ISO 25178: Surface texture", is in the range of Sz = 0.5-5 µm, more preferably Sz = 0.5-2 µm. The preferable surface roughness of the outer surface 12, in terms of maximum height (Sz) based on "ISO 25178: Surface texture", is in the range of Sz = 5-200 µm, more preferably Sz = 20-200 µm. Note that Sa and Sz are measured avoiding open pores 15 in the application surface 11 and outer surface 12.

When manufacturing the fire-spread prevention sheet 10 by molding, for example, the roughness of the application surface 11 and outer surface 12 each can be obtained easily by transferring the roughness of the inner surface of the mold or a resin sheet placed inside the mold. When increasing the surface roughness of the outer surface 12 is desired, a treatment such as blasting to impinge fine particles on the surface may be performed. Increasing the surface roughness of the outer surface 12 compared to the application surface 11 in this way facilitates easy loading or withdrawal of one fire-spread prevention type cell unit 1 at a time into or out of the battery enclosure from among multiple fire-spread prevention type cell units 1. This is because when loading and withdrawing a fire-spread prevention type cell unit 1, the fire-spread prevention type cell unit 1 does not readily adhere to an adjacent fire-spread prevention type cell unit 1. Particularly, multiple fire-spread prevention type cell units 1 inside a battery are often compressed from the outside in the arrangement direction of the fire-spread prevention type cell units 1 after being loaded into the battery. Even in such cases, a large surface roughness of the outer surface 12 can reduce situations where the fire-spread prevention type cell units 1 stick to each other. A smooth application surface 11 can increase adhesive force between the fire-spread prevention sheet 10 and the side of the battery cell 20, allowing for easy loading or withdrawal of one fire-spread prevention type cell unit 1 at a time into or out of the battery.

Note that the means of making the outer surface 12 less adhesive than the application surface 11 is not limited to differentiating the surface roughness described above, and may be other means. The other means may be, for example, forming the fire-spread prevention sheet 10 with two layers of sheets, with the sheet on the outer surface 12 side having greater hardness than the sheet on the application surface 11 side.

In this embodiment, the fire-spread prevention sheet 10 is substantially the same size as the broadest surface (side) of the battery cell 20, but may also be larger or smaller than the side. However, to enhance fire-spread prevention, the fire-spread prevention sheet 10 is preferably the same size or larger than the side of the battery cell 20.

In this embodiment, the fire-spread prevention sheet 10 is a porous sponge sheet. The sponge sheet has pores 15 that are preferably 40-95% by volume, more preferably 60-90% by volume, of the total volume of the sheet. Air inside the pores 15 of the sponge sheet provides excellent thermal insulation to the fire-spread prevention sheet 10. The fire-spread prevention sheet 10 thus contributes to low thermal conductivity between neighboring battery cells 20. The pores 15 have an elongated, that is, anisotropic shape, and the lengthwise direction of the pores 15 is oriented in the thickness direction of the fire-spread prevention sheet 10. The lengthwise direction of the pores 15 is substantially parallel (0°±5°) to the thickness direction of the fire-spread prevention sheet 10. However, some of the multiple pores 15 may have a shape other than elongated, or pores 15 may exist which have an elongated shape but for which the lengthwise direction is not parallel to the thickness direction. At least 50%, preferably at least 70%, more preferably at least 90% of the total number of pores 15 may have an elongated shape and may be oriented with the lengthwise direction substantially parallel to the thickness direction of the fire-spread prevention sheet 10.

As illustrated in Figure 2, in the fire-spread prevention sheet 10, the elongated pores 15 are oriented with the lengthwise direction of the pores 15 pointing in the thickness direction of the sheet. In this case, when the fire-spread prevention sheet 10 is compressed in the thickness direction thereof (that is, in Figure 2, when the fire-spread prevention sheet 10 is subjected to force in direction of arrows F from both sides in the thickness direction), the fire-spread prevention sheet 10 elastically deforms and reduces in thickness, and elastically deforms to the original thickness when the force from arrows F is released. Therefore, the pores 15 can maintain the original shape or a shape close thereto. In this way, the fire-spread prevention sheet 10 can maintain porosity even after repeated compression and release of the fire-spread prevention sheet 10. Accordingly, high thermal insulation of the fire-spread prevention sheet 10 can also be maintained.

The fire-spread prevention sheet 10 is formed mainly from resin or rubber, preferably rubber. The rubber includes, for example, a thermosetting elastomer such as silicone rubber, urethane rubber, isoprene rubber, ethylene propylene rubber, natural rubber, ethylene propylene diene rubber, nitrile rubber (NBR), or styrene butadiene rubber (SBR); a thermoplastic elastomer such as urethane, ester, styrene, olefin, butadiene, or fluorine, or a composite thereof. Among rubbers, silicone rubber with relatively high heat resistance is more suitable. The fire-spread prevention sheet 10 preferably contains silicone rubber as a main material. The fire-spread prevention sheet 10 more preferably is a porous silicone rubber sponge sheet. Note that in this application, "mainly" or "main material" is interpreted to exceed 50% by mass of the total materials.

The fire-spread prevention sheet 10 preferably contains a fire retardant material to further enhance fire-spread prevention ability. The fire retardant material is preferably one or more inorganic compounds such as carbon (including amorphous carbon and graphite), halide, phosphorus compound, platinum, platinum complex, magnesium hydroxide, or aluminum hydroxide. The fire retardant material is preferably 0.5-20% by mass, more preferably 1-20% by mass, of the total mass of the fire-spread prevention sheet 10.

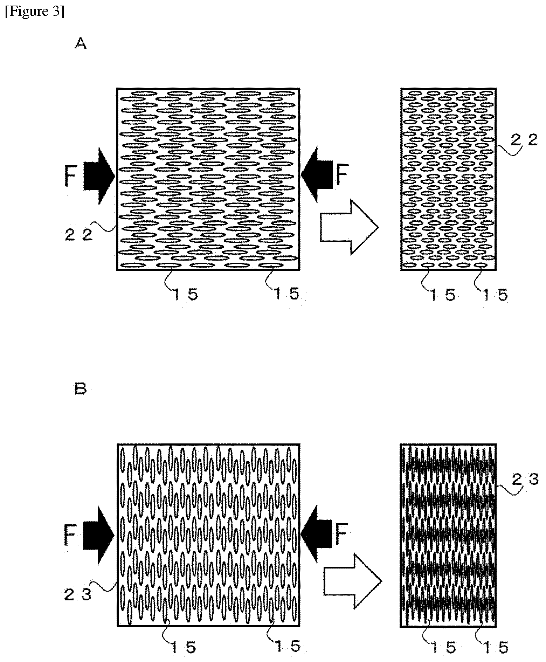

Figure 3 illustrates schematic diagrams of respectively compressed states of a molding (A) in which the lengthwise direction of elongated pores is oriented substantially horizontally and a molding (B) in which the lengthwise direction of elongated pores is oriented substantially vertically.

A is a porous molding 22 in which the lengthwise direction of the elongated pores 15 is oriented substantially horizontally (0°±5°). B is a porous molding 23 in which the lengthwise direction of the elongated pores 15 is oriented substantially vertically (90°±5°). When the moldings 22, 23 are compressed from the directions of arrows F, the moldings 22, 23 elastically deform with reduced thickness in the compression direction. Upon releasing the compression from the direction of arrows F, the moldings 22, 23 return to substantially the original thickness. However, after repeated, long-term compression and release, the molding 23 of B does not return to the original thickness as easily as the molding 22 of A. The degree of recovery from such elastic deformation depends on the relationship between the lengthwise direction of the pores 15 and the compression direction. When the lengthwise direction of the pores 15 and the compression direction are the same, as in the molding 22 of A, the molding 22 easily recovers to the original thickness. However, when the lengthwise direction of the pores 15 and the compression direction are substantially perpendicular, as in the molding 23 of B, the molding 23 does not recover to the original thickness as easily as the molding 22.

### 2. Method for manufacturing fire-spread prevention type cell unit

Next, a method for manufacturing a fire-spread prevention type cell unit of the embodiment of the invention is described with reference to the drawings.

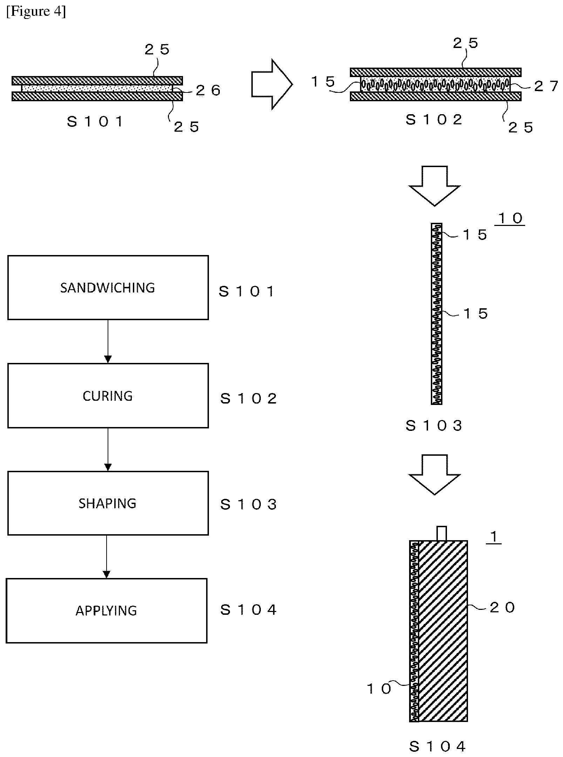

Figure 4 illustrates a flow of steps for manufacturing a fire-spread prevention type cell unit in an embodiment of the invention and cross sections of the representative form in each step.

The method for manufacturing a fire-spread prevention type cell unit in the embodiment is a method for manufacturing the fire-spread prevention type cell unit 1 above, and includes a sandwiching step (S101), a curing step (S102), a sheet shaping step (S103), and an applying step (S104). The following describes each step specifically.

### (1) Sandwiching step (S101)

This step involves sandwiching a curable composition 26, which serves as the fire-spread prevention sheet after curing, between plates 25. The curable composition 26 is preferably capable of retaining shape, and is in a semi-cured state not fully cured, for example. The curable composition 26 sandwiched between the plates 25 preferably is cylindrical, prismatic, or of a similar form. The curable composition 26 contains an organic foaming agent for foaming during curing, for example. The foaming agent may be azobisisobutyronitrile (AIBN) or azodicarbonamide (ADCA), for illustrative purposes. Note that one example of not including an organic foaming agent is a method of using of the curable composition 26 containing thermal expandable resin beads in rubber. In this case, the resin beads become balloon-like during curing, and a sponge-like cured body is obtained. Another example of not including an organic foaming agent is a method of using of the curable composition 26 with air mixed into non-foaming liquid rubber under high pressure. In this case, a sponge-like cured body is obtained by curing the curable composition 26 under normal pressure. Irrespective of the foaming method, in the sandwiching step, the foaming curable composition 26 is sandwiched by the plates 25 from both sides. There are no restrictions on the component material of the plates 25 insofar as the shape can be maintained when curing the curable composition 26, and for example, metal plates such as aluminum plates or resin plates such as polyethylene terephthalate plates can be used.

### (2) Curing step (S 102)

This step involves manufacturing a sponge-like cured body 27 by inducing foaming so that the lengthwise direction of the pores 15 points in the sandwiching direction of the plates 25 after the sandwiching step. The sides of the curable composition 26 do not touch the plates 25. The sides thus transfer heat more quickly than the top and bottom surfaces touching the plates 25. Accordingly, the side areas cure readily before foaming. As a result, inside the curable composition 26, the pores 15 readily elongate toward the plates 25. This completes the sponge-like cured body 27 with elongated pores 15 in the direction of the plates 25. If a curable silicone rubber composition is used as the curable composition 26, the composition is heated in this step.

### (3) Sheet shaping step (S103)

This step involves using the cured body 27 after the curing step to shape the sheet into a form with the lengthwise direction of the pores 15 pointing in the thickness direction of the fire-spread prevention sheet 10. One exemplary shaping method is to slice the sheet from the cured body 27. One example is to slice the dashed-line portion P. Cutting and/or polishing techniques may be used instead of slicing. The step for differentiating the adhesion between the application surface 11 and the outer surface 12 of the fire-spread prevention sheet 10 may be performed during or after this step. When processing the outer surface 12 into a rougher surface than the application surface 11, the outer surface 12 may be subjected to blast treatment. When processing the application surface 11 into a smoother surface than the outer surface 12, the application surface 11 may be mirror polished.

### (4) Applying step (S104)

This step involves applying the fire-spread prevention sheet 10 after the sheet shaping step to the side located in the arrangement direction of the battery cells 20. A typical application method is to apply without any intermediary adhesive, but an adhesive or double-sided tape may also be interposed between the fire-spread prevention sheet 10 and the side of the battery cell 20.

### 3. Compression set testing

The following describes the method and results of compression set testing of different compression directions relative to the pore direction.

First, a foam silicone rubber molding (30 mm diameter × 10 mm thick) with vertically long pores 15 and a foam silicone rubber molding (30 mm diameter × 10 mm thick) with horizontally long pores 15 were prepared. A digital microscope (manufactured by KEYENCE CORPORATION) was used for cross-sectional observation. A spacer 9.4 mm thick was prepared from each molding, and the compression set was measured after placing the spacer in a thermostat oven at 180°C for 20 hours (JIS K 6262). Measurements were taken using a densimeter (manufactured by Alpha Mirage Co., Ltd.), and both moldings were found to have a specific gravity of 0.23 g/cm³. From these results, the moldings were determined to have substantially the same porosity.

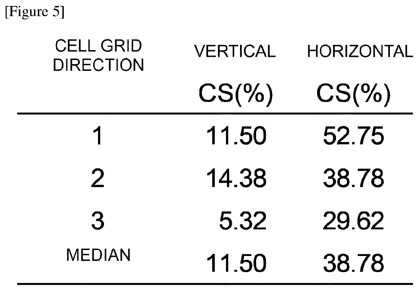

Figure 5 illustrates compression set measurement results for each molding.

As the table in Figure 5 indicates, the silicone rubber molding with the lengthwise direction of the pores 15 substantially parallel to the compression direction ("vertical") resulted in a lower compression set than the silicone rubber molding with the lengthwise direction of the pores 15 substantially perpendicular to the compression direction ("horizontal"). The compression set tends to be lower when the lengthwise direction of the pores 15 is closer to the compression direction, thus indicating elastic deformation. Meanwhile, when the lengthwise direction of the pores 15 is substantially perpendicular to the compression direction, the specimen does not fully return to the original thickness, thus indicating a low elastic recovery ratio.

### 4. Battery

Next, a battery in an embodiment of the invention is described with reference to the drawings. The fire-spread prevention type cell unit 1 of the embodiment above is loaded into a battery.

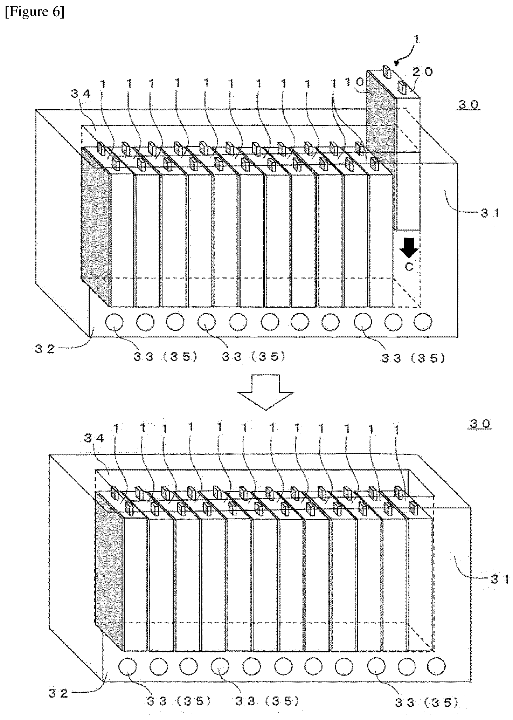

Figure 6 illustrates a perspective view of the situation when loading a fire-spread prevention type cell unit into a battery in an embodiment and the situation after loading is complete.

The battery 30 of the embodiment is a battery for an electric vehicle, for example, and has multiple battery cells 20 arranged side-by-side. The number of battery cells 20 is 12 in this embodiment, but may also be 2-11, or 13 or more. The battery 30 is a storage battery, preferably a lithium-ion battery. The battery 30 includes a bottomed type enclosure 31 open on one side. The battery cells 20 are disposed in the interior 34 of the enclosure 31. Preferably, the multiple battery cells 20 are tightly pressed against each other in the enclosure 31 by applying force in the direction of compressing from both sides using screws or the like (not illustrated). The bottom 32 of the enclosure 31 (an example of a cooling part) has one or more water-cooling pipes 33 carrying cooling water as one example of a coolant 35. The coolant 35 may also be referred to as a cooling medium or refrigerant. The battery cells 20 are disposed inside the enclosure 31 with sandwiching the fire-spread prevention sheet 10 in between adjacent battery cells 20. A fire-spread prevention sheet 10 sticks to a battery cell 20 to form one fire-spread prevention type cell unit 1. The fire-spread prevention type cell unit 1 is loaded into the interior 34 of the enclosure 31 (see the direction of arrow C).

The fire-spread prevention sheet 10 disposed between the battery cells 20 is a porous sheet with the lengthwise direction of the pores 15 parallel in the plane of the fire-spread prevention sheet 10 and oriented in the thickness direction of the fire-spread prevention sheet 10. Therefore, even if the fire-spread prevention sheet 10 is repeatedly compressed between the battery cells 20 and then released from compression, the fire-spread prevention sheet 10 elastically deforms in the thickness direction and readily recovers to the original thickness. Thus, the fire-spread prevention sheet 10 easily maintains the form of the pores 15 for a long time, as a result, maintains thermal insulation for a long time.

### 5. Other embodiments

The above describes an embodiment of the invention, but the present invention is not limited thereto and may be modified in various ways.

In the embodiment above, the surface roughness of the application surface 11 and outer surface 12 is compared using the arithmetic mean height (Sa) or maximum height (Sz) based on "ISO 25178: Surface texture". Instead, however, a similar comparison is possible using the arithmetic mean roughness (Ra) or maximum height (Rz) based on JIS B 0601. In this case, the Ra of the application surface 11 is preferably in the range of 0.02-0.4 µm, more preferably 0.02-0.2 µm. The Ra of the outer surface 12 is preferably in the range of 0.5-25 µm, more preferably 0.7-25 µm. The Rz of the application surface 11 is preferably in the range of 0.4-4 µm, more preferably 0.4-2 µm. The Rz of the outer surface 12 is preferably in the range of 5-300 µm, more preferably 25-300 µm.

The length-to-width ratio (aspect ratio) of the pores 15 is not restricted insofar as the ratio exceeds 1, and is preferably 2 or greater, more preferably 3 or greater.

Preferably, the fire-spread prevention sheet 10 is repeatedly applicable to the side of the battery cell 20. However, the fire-spread prevention sheet 10 may also be fixed to the side of the battery cell 20, disallowing repeated application.

The multiple components of the embodiments above may be combined with each other freely except when combination is unfeasible.

### Industrial Applicability

The present invention is usable in the battery field.

## Claims

1. A fire-spread prevention type cell unit, comprising:
a battery cell; and
a fire-spread prevention sheet applied to a side located in an arrangement direction of the battery cell, wherein
the fire-spread prevention sheet is a porous sponge sheet, and
pores inside the fire-spread prevention sheet have an elongated shape with a lengthwise direction of the pores oriented in a thickness direction of the fire-spread prevention sheet.

2. The fire-spread prevention type cell unit of claim 1, wherein, in the fire-spread prevention sheet, the adhesion of an application surface to the battery cell is higher than the adhesion of an outer surface located on the opposite side from the application surface in the thickness direction of the fire-spread prevention sheet.

3. The fire-spread prevention type cell unit of claim 1 or 2, wherein the fire-spread prevention sheet further includes a fire retardant material.

4. The fire-spread prevention type cell unit of any one of claims 1 to 3, wherein the fire-spread prevention sheet contains silicone rubber as a main material.

5. A method for manufacturing the fire-spread prevention type cell unit of any one of claims 1 to 4, the method comprising:
a sandwiching step of sandwiching a curable composition, which serves as a fire-spread prevention sheet after curing, between plates;
a curing step of manufacturing a sponge-like cured body by inducing foaming so that the lengthwise direction of the pores points in the sandwiching direction of the plates after the sandwiching step;
a sheet shaping step of using the cured body to shape the sheet into a form with the lengthwise direction of the pores pointing in the thickness direction of the fire-spread prevention sheet; and
an applying step of applying the fire-spread prevention sheet after the sheet shaping step to the side located in the arrangement direction of the battery cell.

6. A battery comprising a plural arrangement of the fire-spread prevention type cell unit of any one of claims 1 to 4.
